# EUROPEAN PATENT SPECIFICATION

(11) **EP 4 237 265 B1**
(45) Date of publication and mention of the grant of the patent: **20.03.2024**
(21) Application number: 22715521.5
(22) Date of filing: 21.02.2022
(51) Int. Cl.: B60K 1/00, B60K 1/02

(54) **ELECTRIC DRIVE MODULE FOR DRIVING AN AXLE**
ELEKTRISCHES ANTRIEBSMODUL ZUM ANTREIBEN EINER ACHSE
MODULE D'ENTRAÎNEMENT ÉLECTRIQUE POUR ENTRAÎNER UN ESSIEU

(30) Priority: 21.02.2021 CZ 20210079
(43) Date of publication of application: 06.09.2023
(73) Proprietor: ADVANCED DESIGN SOLUTION, 74221 Koprivnice (CZ)
(72) Inventor: NEUMAN, Vilem, 74221 Koprivnice (CZ)
(74) Representative: Tomickova, Dana
(86) International application number: PCT/CZ2022/050018
(87) International publication number: WO 2022/174847

(56) References cited:
- EP-A1- 2 414 184
- EP-B1- 2 414 184
- WO-A1-2012/087700
- WO-A1-2020/001794
- US-A1- 2020 108 706
- US-B1- 9 637 127

## Description

### Technical Field

The invention relates to an electric drive module for driving an axle, in particular for commercial trucks or independent suspension axles. The electric drive module is composed of a housing on which 1-2 electric motors are flange-mounted, driving via mechanical gears the main gear wheel, which is directly connected to a two-stage gearbox which drives the drive shafts of the moving wheels via axle differential.

### Background of the Invention

Drive modules for driving truck axles or independent suspension axles must have a high value of output torque to drive the shafts of carriers and moving wheels. Compared to passenger cars and light commercial vehicles, the output torque value of truck axles is typically 5-10 times higher. In order to achieve a high value of the output torque, the motor power must be efficiently transferred to the shafts of the carriers. This is usually associated with a number of mechanical connections, gears and similar components that are subject to high mechanical stress, so there is a principle that the less the better. It is therefore necessary to get as much power as possible to the output. Electric motors provide a more efficient option than internal combustion, or diesel, motors, but they need to be connected to a battery of sufficient capacity to be of real value in practice. This creates the need to save as much space as possible in the vehicle structure, which is then used for the placement of the battery. Trucks technically require at least two gears to operate efficiently at higher speeds. In order to achieve optimum power using only electric motors, it is often necessary to have two electric motors in the drive module. For the transfer of motor power to the drive shafts, these types of drive modules often have a so-called bevel gear, which is a source of high mechanical stress, particularly evident in trucks and heavy commercial vehicles. An electric drive module according to the preamble of claim 1 is known from US 9 637 127.

The aim of the invention is to design the most compact possible electric drive module that will include the possibility of drive by one or two electric motors, a two-stage gearbox, and a mechanical axle differential. At the same time, this drive module provides high output torque values to the wheels attached to the output shaft flanges. The object of the present invention is also modularity and the possibility of placement in already existing axle spaces. A further object of the invention is to provide this solution with a parking brake that will meet the standards imposed on these drive modules and, consequently, on the entire vehicles, where the requirements require effective braking of the vehicle on, for example, a 30° incline.

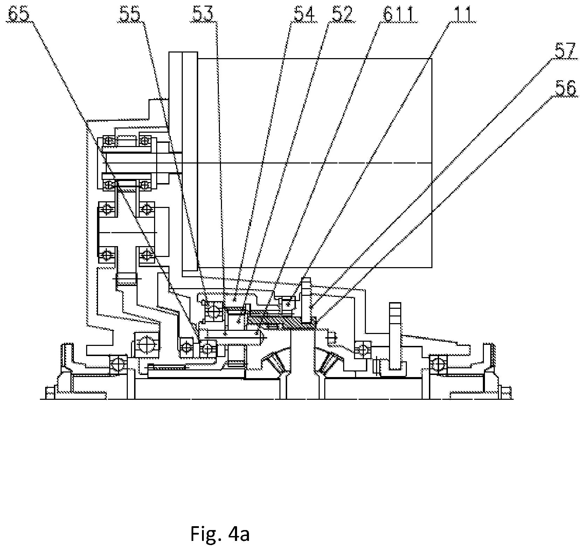

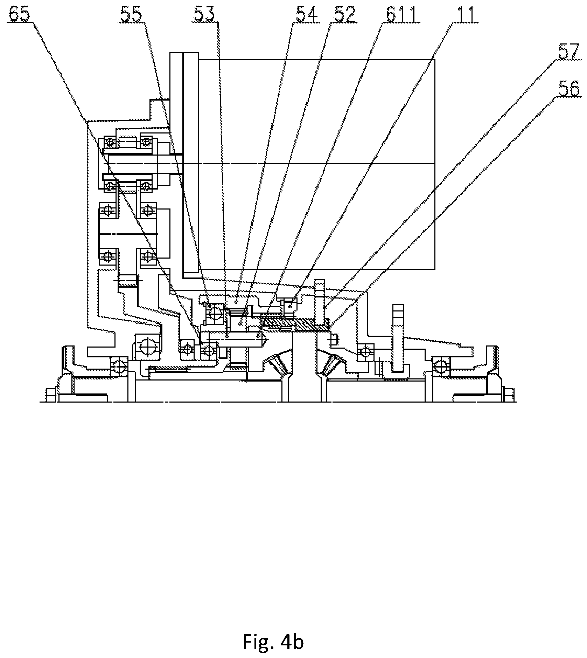

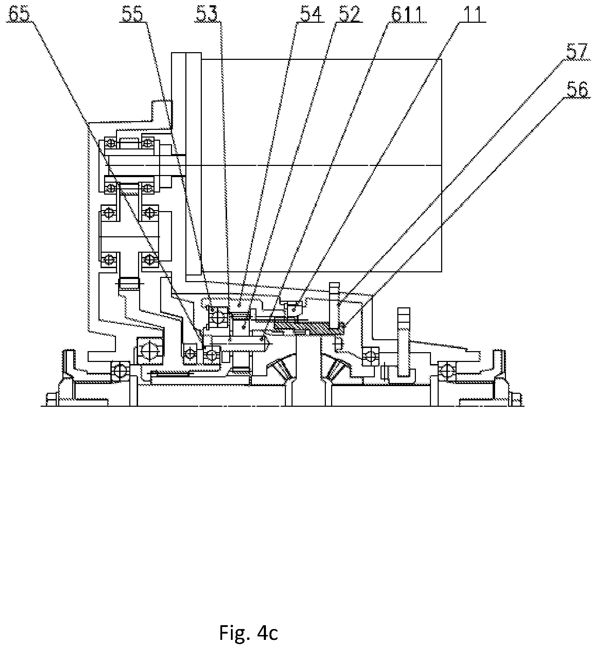

The electric drive module is described, for example, in document EP 2 414 184 B1. This solution includes only a one-stage gearbox and a two-stage gearbox can be added only modularly. The default arrangement therefore comprises only one motor, which is usually not enough for sufficient power in trucks, and the one-stage gearbox will not be sufficient for the optimum speed range. The modular inclusion of a second gearbox in itself represents a complex mechanical solution, as both parts need to be mechanically connected and thus involve a significant number of moving parts, which increases the complexity of the whole system and consequently its weight, the stress on individual parts, and the difficulty in subsequent repair. Just from looking at e.g., Fig. 4, the complexity of this system is evident, as both one- and two-stage gearboxes need to be optionally connected. This drive module is also provided with a braking mechanism, which is implemented by means of a ratchet that fits into the gearing of the parking wheel. It therefore prevents only one-sided rotation. It does not achieve a very useful braking effect, since an additional braking system is envisaged. In addition, it causes enormous stress on this ratchet.

### Summary of the Invention

The above mentioned disadvantages are to some extent eliminated by an electric drive module for driving an axle comprising a housing, at least one electric motor attached to the housing, a main gear wheel mechanically connected to the electric motor by mechanical gears, a gearbox, wherein the gearbox input member is driven by the main gear wheel, an axle differential located in an axle differential housing and driven by the gearbox output, drive shafts driven by the axle differential, wherein the axis of the shafts is parallel to the axis of the gearbox. The electric drive module preferably further comprises a parking brake system. This system comprises a parking brake shaft, a pinion located on the first side of the parking brake shaft, and a brake disc located on the opposite side of the shaft. A braking effect is exerted on the brake disc by a braking element, preferably a brake caliper, or its rotational movement is fixed. The parking brake system is located such that the rotational movement of the main gear wheel is transmitted to the pinion. This arrangement allows the braking of the main gear wheel and hence the entire electric drive module, wherein it is compact, comprises only a few mechanical elements, and is therefore less subject to wear and mechanical stress.

The axis of the brake shaft is at an angle of less than 5° to the axis of the gearbox. The parking brake system further comprises at least one parking brake countershaft provided with a first gear and a second gear. The countershaft is placed such that the first gear is connected to the main gear wheel by its gearing and the second gear is connected to the pinion by its gearing. This arrangement allows for a more efficient transmission of the braking effect due to the gear ratio between the pinion and the main gear wheel. Another preferred embodiment of the parking brake system comprises one additional countershaft, which multiplies the braking effect even further. Further improvement of the braking effect is achieved by the use of two brake calipers placed at opposite ends of the circumference of the brake disc.

To achieve effective compactness of the electric drive module as a whole, the parking brake system is placed such that the brake disc and brake caliper are placed in the space defined by the position of the differential and the output flange of the shaft on the fork side.

The present drive module is preferably arranged such that at least a part of the differential housing is rigidly connected to the output member of the gearbox. The advantage of this solution lies in the reduction of the number of mechanical and moving elements in the electric drive module, which results in less wear of the individual parts, as well as space savings that can be used, for example, for the placement of a larger battery to drive the electric motor.

The differential comprises differential pinions adapted for rotation about the axis of the gearbox and side gears attached to drive shafts and connected to the differential pinions by bevel gear. The gearbox is designed as a planetary gearbox and comprises a sun gear torsionally rigidly connected to the main gear wheel, planet gears, and a ring gear rotatably mounted on the carrier on the side of the main gear wheel. The carrier is designed as an output member of the gearbox and is rigidly connected to a part of the differential housing or is a part thereof. The connection to the differential housing part is made in the region defined by the planet gears faces. This solution allows direct connection of the differential to the gearbox without the need for other mechanical elements, thus significantly reducing the weight and space requirements of the entire electric drive module, as well as reducing the number of mechanical moving parts and thus increasing the life of the module as a whole.

The part of the carrier on the side of the main gear wheel is provided with a number of openings in which pins are inserted. The planet gears are then rotatably mounted on these pins. These openings are placed in the space between the hole for the differential pinions, side gears, and sun gear, and the outer diameter of the axle differential housing part.

The electric drive module preferably further comprises a shift ring, a shift sleeve slidably mounted in the ring gear and slidably engaged in the spline on the differential housing part, and a shift fork by which the shift sleeve is moved. The shift sleeve can be shifted in at least three positions corresponding to two gears and neutral. This preferable embodiment allows for a compact two-stage gearbox structure.

The drive shaft preferably passes through the main gear wheel and sun gear holes on the gear wheel side. Thus, one of the output shafts lies directly in the gearbox. The compact solution of the electric drive module also allows the use of two electric motors that are arranged such that their axes are parallel to the axis of the gearbox. This achieves a higher power of the electric drive module.

Preferably, at least a part of the differential housing is by bearingrotatably mounted on a hub part of the main gear wheel. The way it is mounted thus enables smooth rotational movement of the differential housing part and thus the differential as a whole.

In a further preferred embodiment, the electric drive module further comprises an electromagnetic sensor mounted in the housing and a sensing ring rigidly connected to the differential housing part. This preferred embodiment enables the measurement of the output speed.

### Description of the Drawings

A summary of the invention is further clarified using exemplary embodiments thereof, which are described with reference to the accompanying drawings, where:
- Fig. 1 shows a section of the electric drive module with one electric motor;
- Fig. 2 shows a section of the electric drive module with two electric motors;
- Fig. 3 shows a front view of the electric drive module with two electric motors;
- Fig. 4a shows a rectangular section of the electric drive module in the first gear;
- Fig. 4b shows a rectangular section of the electric drive module in neutral gear;
- Fig. 4c shows a rectangular section of the electric drive module in the second gear;
- Fig. 5 shows a rectangular section of the electric drive module;
- Fig. 6 shows a section of the electric drive module with the parking brake system;
- Fig. 7 shows a section of the electric drive module with the parking brake system with two countershafts;
- Fig. 8 shows a front view of the electric drive module with the parking brake system with two parking brake calipers;
- Fig. 9 shows a front view of the electric drive module with the parking brake system with two parking brake countershafts.

### Exemplary Embodiments of the Invention

The invention will be further clarified using exemplary embodiments with reference to the respective drawings, which, however, have no limiting effect from the point of view of the scope of protection.

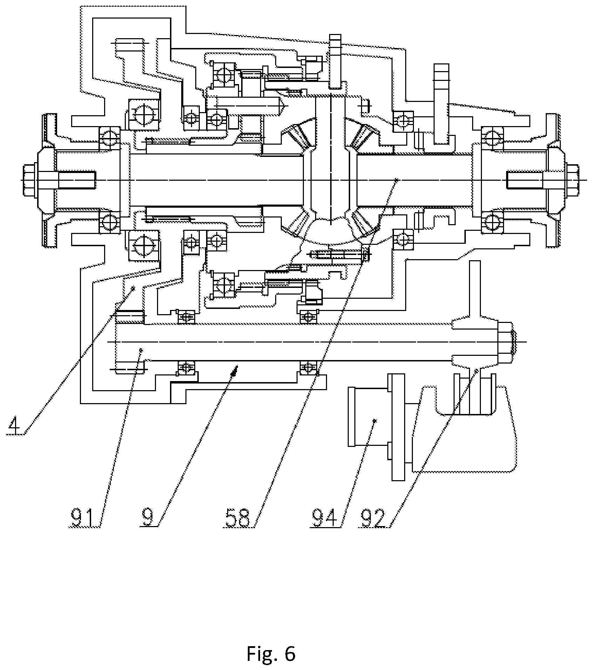

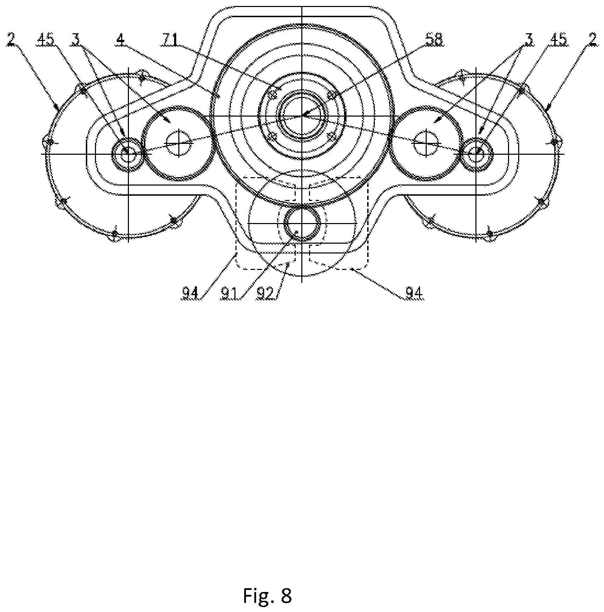

In the exemplary embodiment shown in Fig. 6, the electric drive module comprises a parking brake system 9. The electric motor 2 is connected by mechanical gears 3 to the main gear wheel 4, to which the output rotational movement of the electric motor 2 is transmitted by the mechanical gears 3. The main gear wheel 4 is directly connected to gearbox 5. The main gear wheel 4 therefore serves as the input member of the gearbox 5. The smooth rotational movement of the main gear wheel 4 is provided by the first bearing 42 and the second bearing 43. The main gear wheel 4 is further provided with a hub 41 and a main gear wheel hole 44 located in the center of the main gear wheel 4. The invention is not limited to the use of only one electric motor 2, for example, multiple electric motors 2 may be used, wherein the electric motors 2 are arranged such that their axes 45 are parallel or perpendicular and the overall structure of the housing 1, the electric motors 2, and the gearbox 5 is symmetrical. In the case of a perpendicular arrangement of the axes 45 of the electric motors, these axes 45 can be in different planes. All electric motors 2 are then used to drive the rotational movement of the main gear wheel 4. For example, the electric motors 2 are arranged such that their axes of rotation are parallel to the axis 58 of the gearbox. However, it is also possible to have an arrangement where their axes are perpendicular to the axis 58 of the gearbox. The electric drive module further comprises a parking brake system 9 attached to the housing 1 in the space defined by the electric motors 2. The parking brake system 9 comprises at least a parking brake shaft 93, a pinion 91 rigidly connected to the parking brake shaft 93 on one side thereof, a parking brake disc 92 rigidly connected to the parking brake shaft **93** on a side opposite to the pinion 91, and at least one braking element 94 securing the rotation of the brake disc 92 by pressure. For example, a brake caliper 94 is used as the braking element 94, but the invention is not limited to the use of this braking element, e.g., a drum brake mechanism may be selected as another exemplary embodiment. For example, two brake calipers 94 placed opposite each other may be used, as shown in Fig. 8, or in such a way that they grip the brake disc 92 at opposite ends of its circumference. The brake calipers 94 are placed on the side of the drive shaft **8** on the fork side, i.e., at the point where the size of the differential housing 6 is already decreasing. The axis of the parking brake shaft 93 is approximately parallel to the axis 58 of the gearbox. The parking brake system 9 is placed such that the rotational movement of the main gear wheel 4 is transmitted to the pinion 91 rigidly attached on the parking brake shaft 93 and it rotates the parking brake shaft 93 and, therefore, the parking brake disc 92. The parking brake system 9 has braking effect when the electric drive module is either idling or switched off. The braking effect is achieved by pressing the brake disc 92 with the brake caliper 94. This prevents the rotation of the parking brake shaft 93 and the pinion 91. Due to the connection between the pinion 91 and the main gear wheel 4, the rotational movement of the main gear wheel 4 is prevented, which ultimately prevents the rotation of the carriers 71, 72 and therefore the rotation of the wheels through the gearbox 5 and the differential 6.

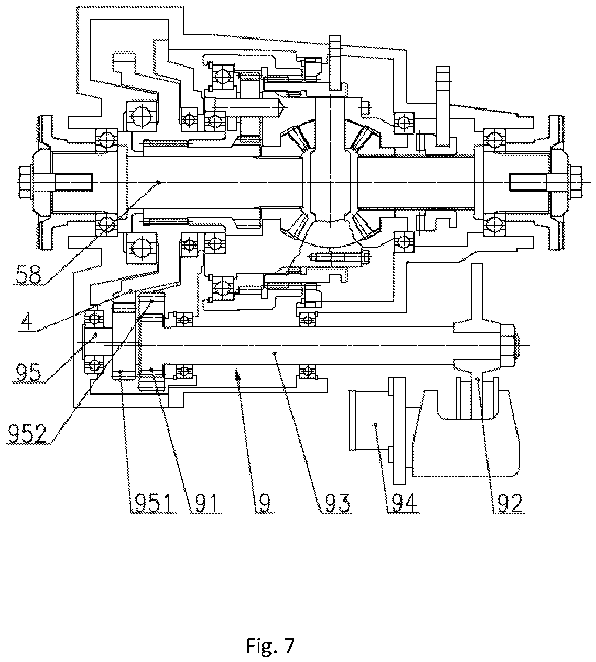

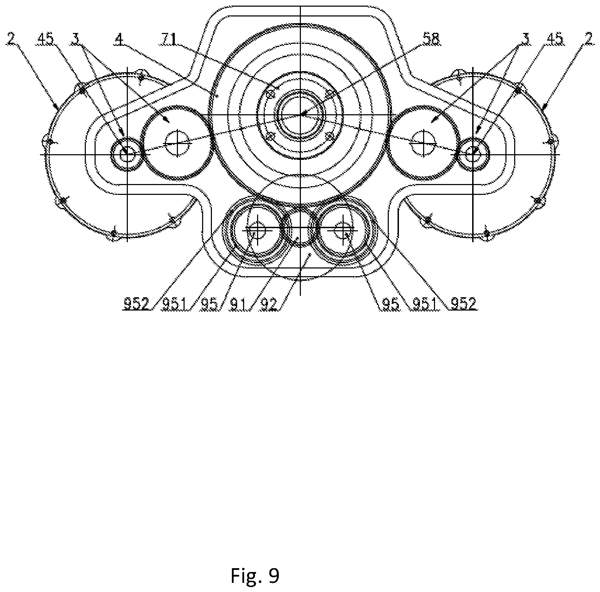

In another exemplary embodiment shown in Fig. 7 and 9, the parking brake system 9 further comprises at least one parking brake countershaft 95 provided with a first gear 951 and a second gear 952. The countershaft 95 is placed such that its first gear 951 is connected by its gearing to the gearing of the main gear wheel 4 and its second gear 952 is connected by its gearing to the pinion 91. In the case where two countershafts 95 are used, the second countershaft 95 is placed such that the above arrangement conditions are met. In the whole structure of the electric drive module, the parking brake system 9 is placed such that the axes of the disc and spindle are as close as possible to the axis 58 of the gearbox. Then, in order to achieve a higher compactness of the entire electric drive module, the parking brake system 9 is exemplarily placed such that the brake disc 92 and the brake caliper 94 lie in the region defined by the position of the differential 6 and the output flange 81 of the shaft on the fork side, as can be seen in Fig. 6 and 7.

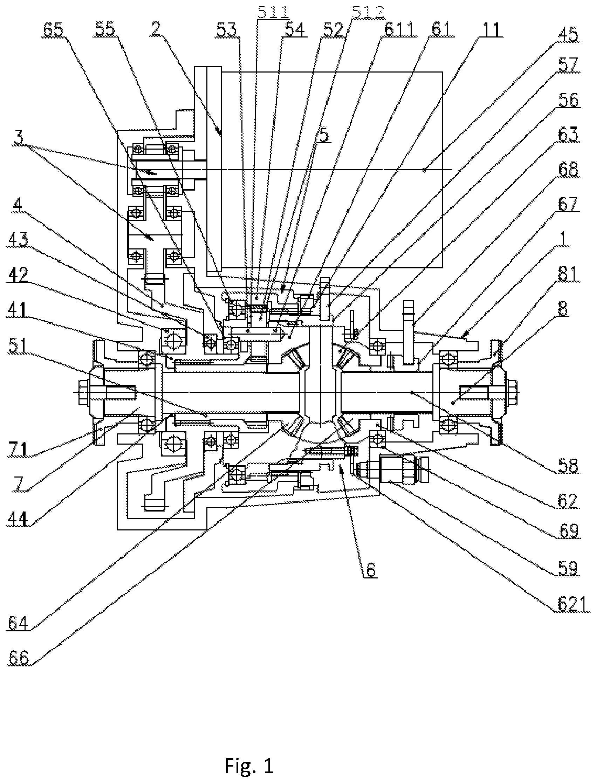

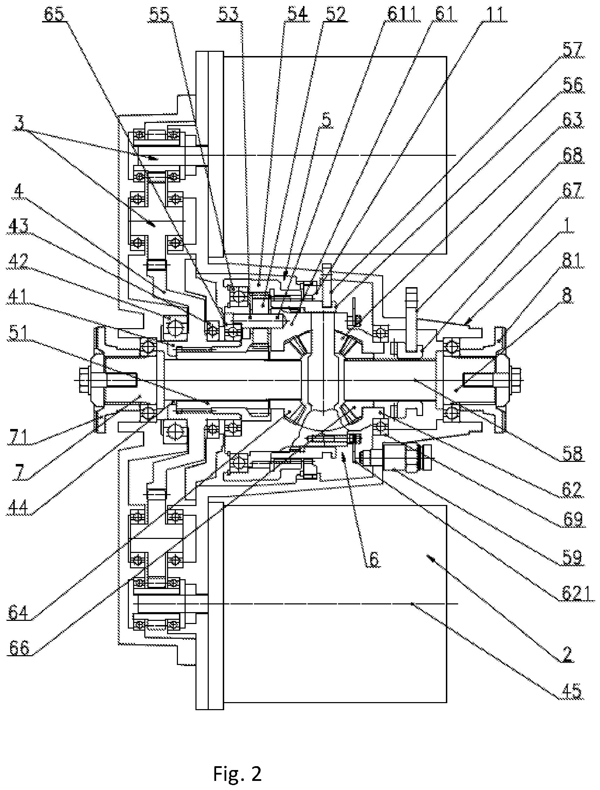

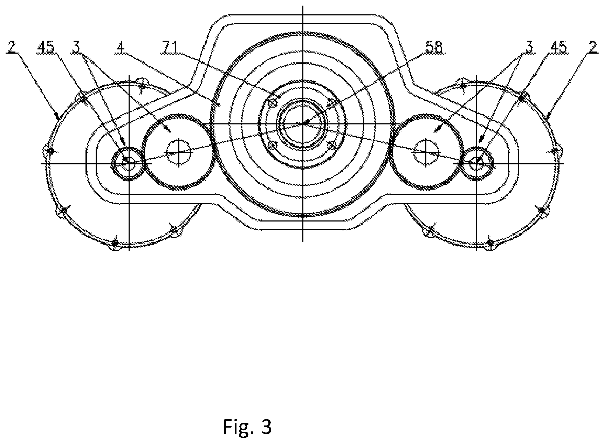

In another exemplary embodiment shown in Fig. 1-5, the electric drive module comprises a housing 1 in which at least one electric motor 2 is attached, further comprising a gearbox 5, an axle differential 6, and rigidly attached shift ring 11.

The electric motor 2 is attached in the housing 2 by means of screws, flanges, or other fixing mechanism and then connected by means of mechanical gears 3 to the main gear wheel 4, to which the output rotational movement of the electric motor 2 is transmitted by the mechanical gears 3. The mechanical gears 3 are a set of geared wheels, shafts, chains, or wheels and belts and serve to transmit the output rotation of the electric motor 2 to other mechanisms of the electric drive module. The main gear wheel 4 is connected to the gearbox 5. The main gear wheel 4 therefore serves as the input member of the gearbox 5. The smooth rotational movement of the main gear wheel 4 is provided by the way it is pivotally housed by means of the first bearing 42 and the second bearing 43. The main gear wheel 4 is further provided with a hub 41 and a main wheel hole 44 located in the center of the main gear wheel 4. The invention is not limited to the use of only one electric motor 2, for example, multiple electric motors 2 may be used, wherein the electric motors 2 are arranged such that their axes 45 are parallel or perpendicular and the overall structure of the housing 1, the electric motors 2, and the gearbox 5 is symmetrical. In the case of a perpendicular arrangement of the axes 45 of the electric motors, these axes 45 can be in different planes. All electric motors 2 are then used to drive the rotational movement of the main gear wheel 4. For example, the electric motors 2 are arranged such that their axes 45 of rotation are parallel to the axis 58 of the gearbox. This exemplary embodiment is the preferred variant in terms of drive module symmetry and parallelism of all axes of rotation. However, it is also possible to have an arrangement where their axes are perpendicular to the axis 58 of the gearbox.

The gearbox 5 typically comprises an input member with angular velocity corresponding to the input angular velocity of an element of the gearbox 5. This angular velocity is then increased, decreased, or kept constant by means of the individual gears of the gearbox 5 and then transmitted to the output member of the gearbox 5. The angular velocities of the input and output members of the gearbox 5 may therefore differ. In an exemplary embodiment, the gearbox 5 is implemented as a two-stage planetary gearbox, however this choice does not represent any limitation in terms of the scope of protection. The gearbox 5 comprises a sun gear 51, at least three planet gears 52 attached on a carrier 510, for example four of them, and a ring gear 54. The sun gear 51 is fitted with the planet gears 52, which by their gearing fit into the gearing of the ring gear 54. The rotational movement of the sun gear 51 is made possible by the connection to the main gear wheel 4, to which the sun gear 51 is torsionally rigidly connected in its hole 44, their angular velocities are therefore the same. In planetary gearboxes, the sun gear 51 serves as the input member of the gearbox 5, and the carrier 510 serves as the output member of the gearbox 5. Since the rotation of the sun gear 51 corresponds to the rotation of the main gear wheel 4, the main gear wheel 4 can be regarded as the input member of the gearbox 5. The sun gear 51, the planet gears 52, and the ring gear 54 can rotate about the axis 58 of the gearbox. Each of the planet gears 52 then has its own axis of rotation passing through its center. Thus, the planet gears 52 may perform a dual rotational movement, one about the axis 58 of the gearbox, the other one about an axis proper to each planet gear 52. The gearbox 5 further comprises a shift sleeve 56 slidably housed in the ring gear 54 for changing the gear of the gearbox 5, and a control fork 57 adapted to change the position of the shift sleeve 56.

The axle differential 6 is housed in the axle differential housing. The axle differential 6 housing may be a single piece, but is exemplarily composed of two or more connected parts 61, 62. In the case where the differential 6 housing is a single piece, the differential housing parts 61, 62 may designate certain regions on the differential 6 housing without the need to physically divide it into two separable parts. In an exemplary embodiment, the differential 6 housing is divided into two connected parts, namely a housing part 61 on the main gear wheel side and a housing part 62 on the fork side. The axle differential 6 is used to drive the moving wheels to which it is connected and transmits movement to them by means of the drive shaft 7 on the main gear wheel side and the carriers 71 attached thereto and the drive shaft 8 on the fork side and the carriers 81 attached thereto. The central axes of the first and second shafts 7, 8 are identical or parallel to the axis 58 of the gearbox. For example, the drive shaft 7 on the main gear wheel side passes through the hole of the central gear 51 and the main gear wheel 4, thus in this arrangement the shafts 7, 8 lie on the axis 58 of the gearbox. The axle differential 6 is housed in the axle differential housing and comprises differential pinions 63, differential lock sleeve 67 and control fork 68. The differential pinions 63 are connected by gearing to the first side gear 64 attached on the first shaft 7 and to the second side gear 66 attached on the second shaft 8. The differential pinions 63 rotate about the axis 58 of the gearbox or an axis parallel thereto and with this rotational movement rotate the first and second planetary gears 64, 66 and hence the shafts 7, 8. The differential pinions 63 can further rotate about an axis passing through their center. The differential lock sleeve 67 is slidably housed on the drive shaft 8 on the fork side. During its translational movement, the differential lock sleeve 67 engages the gearing on the housing part 62 on the fork side. This movement of the differential lock sleeve 67 is controlled electronically by the differential lock fork fork 68. The number of degrees of freedom of the differential 6 is controlled by the differential lock 68, where in a first position of the differential lock 68 the differential pinions 63 are allowed to rotate both about their central axis, generally perpendicular to the axis 58 of the gearbox, and about the axis 58 of the gearbox. In this position, the shafts 7, 8 can therefore rotate at different speeds. In the second position of the differential lock sleeve 67, the differential pinions 63 are fixed and can only perform rotation about the axis 58 of the gearbox and the shafts 7, 8 therefore rotate at the same speed.

At least the housing part 61 on the main gear wheel side is pivotally housed by the first differential bearing 65 on the main gear wheel hub part 11, and its rotational movement is thus allowed. In the case where the differential housing consists of a single piece, it is pivotally housed by the first differential bearing 65 on the main gear wheel hub part 11. Thus, at least a part of the housing may perform rotational movement about an axis parallel or identical to the axis 58 of the gearbox. In an exemplary embodiment, the rotation of the entire housing as a whole is enabled by the rigid connection of the housing parts 61, 62. However, the rotation of the housing is independent of the rotation of the main gear wheel 4. The housing 61 part on the main gear wheel side is further provided with an outer gearing and a number of openings 611 located in the space defined by the differential pinions 63, the first side gear 64, the sun gear 51, and the outer circumference of the housing part 61 on the main gear wheel side. The openings 611 correspond in their arrangement and number to the arrangement and number of the gearbox planet gears 52. The planet gear pins 53, on which the planet gears 52 are pivotally attached, are then rigidly housed in these openings 611. At least the housing part 61 on the main gear wheel side is pivotally housed in the housing 1 on the main gear wheel hub part 41 via the first differential bearing 65, and thus, due to its direct connection to the planet gears 52, serves as their carrier 510 and thus as the output member of the gearbox 5. Further, the ring gear 54 is pivotally housed on the housing part 61 on the main gear wheel side by means of the ring gear bearing 55, the housing part 61 on the main gear wheel side is therefore the closest element of the differential 6 with respect to the main gear wheel 4. This pivotal housing allows independent rotational movement of the ring gear 54 and part 51 of the differential housing on the main gear wheel side. The housing part 62 on the fork side is pivotally housed by the second differential bearing 69. Thus, this housing part 62 can perform rotational movement also when these parts 61, 62 are separated. In an exemplary embodiment of the invention, however, these parts 61, 62 are connected and thus perform the rotational movement together.

In an exemplary embodiment of the invention, two gears and neutral can be used in the gearbox 5. The shift sleeve 56 can thus be in three positions, where in the first position of the shift sleeve 56 shown in Fig. 4a, the first gear is engaged, in the second position of the shift sleeve 56 shown in Fig. 4b, the neutral is engaged, and in the third position of the shift sleeve 56 shown in Fig. 4c, the second gear is engaged. The change of position of the shift sleeve 56 is controlled electronically by the shift fork 57. When changing the position of the shift sleeve 56, there is a sliding engagement with the outer gearing on the housing part 61 on the side of the main gear wheel and the shift ring 11. In a slow gear, the sun gear 51 is driven by the main gear wheel 4 and the ring gear 54 is braked. The planet gears 52, to which the rotation of the sun gear 51 is transmitted, are connected to the sun gear 51 by the gearing. However, the ring gear 54 is fixed and the planet gears 52 are thus forced to orbit around the sun gear 51 while rotating about their own axis. The rotational movement of the planet gears 52 about the axis 58 of the gearbox is transmitted to the carrier 510, i.e., the output member. The output rotation of the planet gears 52 about the gearbox axis 58 is transmitted to at least the housing part 61, which itself serves as the carrier 510 and thus the output member, by means of the planet gear pins 53 placed in the housing openings 611. Thus, at least the differential housing part 61 rotates about the axis 58 of the gearbox. The differential pinions 63 placed in the differential housing 61, 62 begin to rotate about the axis 58 of the gearbox, they transmit the rotational movement by means of the bevel gear to the first and second side gears 64, 66 and thus begin to rotate the drive shafts 7 and 8. The slow gear, or first gear, thus slows the input rotational movement in a ratio determined by the ratios of the sun gear 51, planet gears 52, and ring gear 54. For example, the the ratio of the rotation speed of the input and output of the gearbox 5 is 1:3.4, however, in terms of the scope of protection, this value is not limiting, but optional according to the application of the invention. In the fast gear, the ring gear 54 is rigidly pivotally connected by the shift sleeve 56 to at least the housing part 61. Thus, the rotation of the housing part 61 is associated with the rotation of the ring gear 54. This housing part 61, which also serves as the output member and carrier 510, rotates together with the ring gear 54 and the planet gears 52 about the axis 58 of the gearbox. Due to the direct connection of the ring gear 54 to the carrier 510, the rotational movement of the ring gear 54 is the output of the gearbox 5 with an output angular velocity ratio of 1:1. The differential 6 housing begins to rotate, the differential pinions 63 begin to rotate about the axis 58 of the gearbox, they transmit the rotational movement by means of the bevel gear to the first and second side gears 64, 66 and thus begin to rotate the drive shafts 7 and 8.

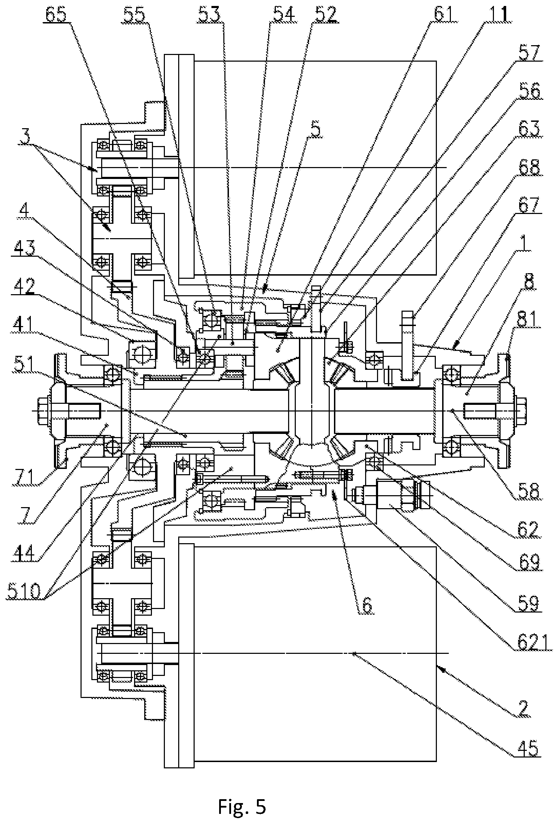

In another exemplary embodiment shown in Fig. 5, the electric drive module is further equipped with a speed sensor 59 and a sensing ring 621. The speed sensor 59 is designed as an electromagnetic sensor and is mounted in the housing 1 of the electric drive module. The sensing ring 621 is attached on the differential housing, which is designed as an output member and thus rotates about the axis 58 of the gearbox. Similarly, the sensing ring 621 rotates about this axis and periodically comes into proximity of the speed sensor 59. The sensing ring 621 induces in the speed sensor 59 an electrical voltage with a periodic waveform, where the period of the voltage waveform corresponds to the period of rotation of the sensing ring 621 about the axis 58 of the gearbox.

In an exemplary embodiment, the axle width, or the distance between the axle carriers 71, is 700 mm.

### List of Reference Signs

- 1 -: housing
- 11 -: shift ring
- 2 -: electric motor
- 3 -: mechanical gears
- 4 -: main gear wheel
- 41 -: main gear wheel hub part
- 42 -: main gear wheel first bearing
- 43 -: main gear wheel second bearing
- 44 -: main gear wheel hole
- 45 -: axis of the electric motor
- 5 -: gearbox
- 51 -: sun gear
- 52 -: planet gear
- 53 -: planet gear pin
- 54 -: ring gear
- 55 -: ring gear bearing
- 56 -: shift sleeve
- 57 -: shift fork
- 58 -: axis of the gearbox
- 59 -: speed sensor
- 510 -: carrier
- 511 -: planet gear face
- 512 -: planet gear face
- 6 -: axle differential
- 61 -: differential housing part on the main gear wheel side
- 611 -: differential housing openings
- 62 -: differential housing part on the fork side
- 621 -: sensing ring
- 63 -: differential pinion
- 64 -: first side gear
- 65 -: first differential bearing
- 66 -: second side gear
- 67 -: differential lock sleeve
- 68 -: differential lock fork
- 69 -: second differential bearing?
- 7 -: drive shaft on the main gear wheel side
- 71 -: output flange
- 8 -: drive shaft on the fork side
- 81 -: output flange
- 9 -: parking brake
- 91 -: pinion
- 92 -: parking brake disc
- 93 -: parking brake shaft
- 94 -: brake caliper
- 95 -: parking brake countershaft
- 951 -: first parking brake gear
- 952 -: second parking brake gear

## Claims

1. An electric drive module for driving an axle comprising a housing (1), at least one electric motor (2) attached to the housing, a main gear wheel (4) mechanically connected to the electric motor (2) by mechanical gears (3), a gearbox (5), wherein the gearbox (5) input member is driven by the main gear wheel (4), an axle differential (6) located in an axle differential housing (61, 62) and driven by a gearbox (5) output, drive shafts (7, 8) driven by the axle differential (6), wherein the axis of the shafts (7, 8) is identical or parallel to the axis (58) of the gearbox, and it further comprises a parking brake system (9) **characterized in that** the parking brake system(9) comprises a parking brake shaft (93), a pinion (91) placed on the first side of the parking brake shaft (93), a brake disc (92) placed on the side of the shaft (93) opposite to the pinion, and a braking element (94) adapted to exert a braking effect on the brake disc (92), wherein the parking brake system (9) is placed such that the rotational movement of the main gear wheel (4) is transmitted to the pinion (91).

2. The electric drive module for driving an axle of claim 1, **characterized in that** the axis of the shaft (93) forms an angle of less than 5° with the axis (58) of the gearbox.

3. The electric drive module for driving an axle of claims 1 and 2, **characterized in that** the parking brake system (9) further comprises at least one parking brake countershaft (95) provided with a first gear (951) and a second gear (952) and placed such that the first gear (951) is connected by its gearing to the main gear wheel (4) and the second gear (952) is connected by its gearing to the pinion (91).

4. The electric drive module for driving an axle of claim 3, **characterized in that** it comprises two countershafts (95) arranged around the circumference of the main gear wheel (4).

5. The electric drive module for driving an axle of claims 1 to 4, **characterized in that** it comprises two brake calipers (94) placed at opposite ends of the circumference of the brake disc (92).

6. The electric drive module for driving an axle of claims 1 to 5, **characterized in that** the brake disc (92) and the brake caliper (94) are placed in the space defined by the position of the differential (6) and the output flange (81) of the shaft (8) on the fork side.

7. The electric drive module for driving an axle of claims 1 to 6, **characterized in that** at least a part (61, 62) of the differential housing is rigidly connected to the gearbox (5) output member.

8. The electric drive module for driving an axle of claims 1 to 7, **characterized in that** the differential (6) comprises differential pinions (63) adapted for rotation about the axis (58) of the gearbox and side gears (64) attached on drive shafts (7, 8) and connected by bevel gear to the differential pinions (63).

9. The electric drive module for driving an axle of claims 1 to 8, **characterized in that** the gearbox (5) is designed as a planetary gearbox (5), wherein it comprises a sun gear (51) torsionally rigidly connected to the main gear wheel (4), planet gears (52), wherein the carrier (510) is designed as the gearbox (5) output member and is rigidly connected to the differential housing part (61) or is a part thereof, wherein the connection to the differential housing part (61) is made in the region defined by the planet gear faces (511, 512); and the ring gear (54) pivotally housed on the housing part (61) on the main gear wheel side.

10. The electric drive module for driving an axle of claim 9, **characterized in that** the housing part (61) on the main gear wheel side is provided with a number of openings (611) in which the pins (53) are inserted, wherein the planet gears (52) are pivotally housed on the pins (53).

11. The electric drive module for driving an axle of claim 10, **characterized in that** the openings (611) are placed in the space between the hole for the differential pinions (63), the side gear (64), and the sun gear (51) and the outer circumference of the housing part (61) of the axle differential (6).

12. The electric drive module for driving an axle of claims 9 to 11, **characterized in that** it further comprises a shift ring (11), a shift sleeve (56) slidably fitted in the ring gear (54) via connecting spline and slidably engaging with the spline of the housing part (61) on the main gear wheel side, and a shift fork (57) adapted to move the shift sleeve (56), wherein the shift sleeve (56) has at least three positions, where the first position corresponds to the first gear, the second position corresponds to the neutral, and the third position corresponds to the second gear.

13. The electric drive module for driving an axle of claims 1 to 12, **characterized in that** the drive shaft (7) on the gear wheel side passes through the holes of the main gear wheel (4) and the sun gear (51).

14. The electric drive module for driving an axle of claims 1 to 13, **characterized in that** it comprises two electric motors (2), wherein the axes (45) of the electric motors are parallel to the axis (58) of the gearbox.

15. The electric drive module for driving an axle of claims 1 to 14, **characterized in that** the housing part (61) of the axle differential (6) is supported by a bearing (65) on a hub part (41) of the main gear wheel (4).

16. The electric drive module for driving an axle of claims 1 to 15, **characterized in that** it further comprises an electromagnetic speed sensor (59) mounted in the housing (1) and a sensing ring (621) rigidly connected to the housing part (62) on the fork side, wherein the speed sensor (59) with a prescribed clearance is axially adjacent to the sensing ring (621).

## Patentansprüche

1. Ein elektrisches Antriebsmodul zum Antrieben einer Achse, umfassend ein Gehäuse (1), mindestens einen am Gehäuse angebrachten Elektromotor (2), ein mit dem Elektromotor (2) über mechanische Zahnräder (3) mechanisch verbundenes Hauptzahnrad (4), ein Getriebe (5), wobei das Getriebeeingangsglied (5) vom Hauptzahnrad (4) angetrieben wird, ein Achsdifferenzial (6), das in einem Achsdifferentialgehäuse (61, 62) angeordnet ist und von einem Getriebeausgangsglied (5) angetrieben wird, Abtriebswellen (7, 8), die vom Achsdifferenzial (6) angetrieben werden, wobei die Achse der Wellen (7, 8) gleich oder parallel zur Achse (58) des Getriebes ist, und es ferner eine Feststellbremsanlage (9) umfasst, **dadurch gekennzeichnet, dass** die Feststellbremsanlage (9) eine Parkbremswelle (93), ein auf der ersten Seite der Feststellbremswelle (93) angeordnetes Ritzel (91), eine auf der dem Ritzel gegenüberliegenden Seite der Welle (93) angeordnete Bremsscheibe (92), und ein Bremselement (94) umfasst, das dazu eingerichtet ist, eine Bremswirkung auf die Bremsscheibe (92) auszuüben, wobei die Feststellbremsanlage (9) derart angeordnet ist, dass die Drehbewegung des Hauptzahnrades (4) auf das Ritzel (91) übertragen wird.

2. Das elektrische Antriebsmodul zum Antrieben einer Achse, nach Anspruch 1, **dadurch gekennzeichnet, dass** die Achse der Welle (93) mit der Achse (58) des Getriebes einen Winkel von weniger als 5° bildet.

3. Das elektrische Antriebsmodul zum Antrieben einer Achse, nach den Ansprüchen 1 und 2, **dadurch gekennzeichnet, dass** die Feststellbremsanlage (9) ferner mindestens eine Feststellbrems-Vorgelegewelle (95) umfasst, die mit einem ersten Zahnrad (951) und einem zweiten Zahnrad (952) versehen ist und so angeordnet ist, dass das erste Zahnrad (951) mit seinem Getriebe mit dem Hauptzahnrad (4) verbunden ist und das zweite Zahnrad (952) mit seinem Getriebe mit dem Ritzel (91) verbunden ist.

4. Das elektrische Antriebsmodul zum Antrieben einer Achse, nach Anspruch 3, **dadurch gekennzeichnet, dass** es zwei Vorgelegewellen (95) umfasst, die um den Umfang des Hauptzahnrads (4) herum angeordnet sind.

5. Das elektrische Antriebsmodul zum Antrieben einer Achse, nach den Ansprüchen 1 bis 4, **dadurch gekennzeichnet, dass** es zwei Bremssättel (94) umfasst, die an gegenüberliegenden Enden des Umfangs der Bremsscheibe (92) angeordnet sind.

6. Das elektrische Antriebsmodul zum Antrieben einer Achse, nach den Ansprüchen 1 bis 5, **dadurch gekennzeichnet, dass** die Bremsscheibe (92) und der Bremssattel (94) in den durch die Position des Differentials (6) und den Ausgangsflansch (81) der gabelseitigen Welle (8) definierten Raum angeordnet sind.

7. Das elektrische Antriebsmodul zum Antrieben einer Achse, nach den Ansprüchen 1 bis 6, **dadurch gekennzeichnet, dass** zumindest ein Teil (61, 62) des Differentialgehäuses starr mit dem Getriebeausgangsglied (5) verbunden ist.

8. Das elektrische Antriebsmodul zum Antrieben einer Achse, nach den Ansprüchen 1 bis 7, **dadurch gekennzeichnet, dass** das Differential (6) Differentialritzel (63) umfasst, die zur Drehung um die Achse (58) des Getriebes angepasst sind, und Seitenräder (64), die an den Antriebswellen (7, 8) angebracht sind und über ein Kegelrad mit den Differentialritzeln (63) verbunden sind.

9. Das elektrische Antriebsmodul zum Antrieben einer Achse, nach den Ansprüchen 1 bis 8, **dadurch gekennzeichnet, dass** das Getriebe (5) als Planetengetriebe (5) ausgebildet ist, wobei es ein mit dem Hauptzahnrad (4) drehfest verbundenes Sonnenrad (51) umfasst, Planetenräder (52), wobei der Träger (510) als Getriebeausgangsglied ausgebildet ist und starr mit dem Differentialgehäuseteil (61) verbunden ist oder ein Teil davon ist, wobei die Verbindung mit dem Differentialgehäuseteil (61) in dem durch die Planetenradflächen (511, 512) definierten Bereich ausgebildet ist; und ein Hohlrad (54), das schwenkbar an dem hauptradseitigen Gehäuseteil (61) aufgenommen ist.

10. Das elektrische Antriebsmodul zum Antrieben einer Achse, nach Anspruch 9, **dadurch gekennzeichnet, dass** das hauptradseitige Gehäuseteil (61) mit einer Anzahl von Öffnungen (611) versehen ist, in die Stifte (53) eingesetzt sind, wobei die Planetenräder (52) schwenkbar an den Stiften (53) aufgenommen sind.

11. Das elektrische Antriebsmodul zum Antrieben einer Achse, nach Anspruch 10, **dadurch gekennzeichnet, dass** die Öffnungen (611) im Raum zwischen dem Loch für die Differentialritzel (63), dem Seitenrad (64) und dem Sonnenrad (51) und dem Außenumfang des Gehäuseteils (61) des Achsdifferentials (6) angeordnet sind.

12. Das elektrische Antriebsmodul zum Antrieben einer Achse, nach den Ansprüchen 9 bis 11, **dadurch gekennzeichnet, dass** es ferner einen Schaltring (11), eine Schaltmuffe (56), die verschiebbar im Hohlrad (54) über einen Verbindungskeil angebracht ist und gleitend mit der Keilverzahnung des hauptradseitigen Gehäuseteils (61) in Eingriff steht, und eine Schaltgabel (57), die angepasst ist, um die Schaltmuffe (56) zu bewegen, umfasst, wobei die Schaltmuffe (56) mindestens drei Positionen aufweist, wobei die erste Position dem ersten Gang entspricht, die zweite Position der Neutralstellung entspricht und die dritte Position dem zweiten Gang entspricht.

13. Das elektrische Antriebsmodul zum Antrieben einer Achse, nach den Ansprüchen 1 bis 12, **dadurch gekennzeichnet, dass** die getrieberadseitige Antriebswelle (7) die Löcher des Hauptzahnrades (4) und des Sonnenrades (51) durchsetzt.

14. Das elektrische Antriebsmodul zum Antrieben einer Achse, nach den Ansprüchen 1 bis 13, **dadurch gekennzeichnet, dass** es zwei Elektromotoren (2) umfasst, wobei die Achsen (45) der Elektromotoren parallel zur Achse (58) des Getriebes sind.

15. Das elektrische Antriebsmodul zum Antrieben einer Achse, nach den Ansprüchen 1 bis 14, **dadurch gekennzeichnet, dass** das Gehäuseteil (61) des Achsdifferentials (6) durch ein Lager (65) an einem Nabenteil (41) des Hauptzahnrades (4) abgestützt ist.

16. Das elektrische Antriebsmodul zum Antrieben einer Achse, nach den Ansprüchen 1 bis 15, **dadurch gekennzeichnet, dass** es ferner einen im Gehäuse (1) gelagerten elektromagnetischen Drehzahlsensor (59) und einen gabelseitig starr mit dem Gehäuseteil (62) verbundenen Tastring (621) umfasst, wobei der Drehzahlsensor (59) mit einem vorgegebenen Spiel axial benachbart zu dem Tastring (621) angeordnet ist.

## Revendications

1. Un module d'entraînement électrique pour entraîner un essieu, comprenant un boîtier (1) ; au moins un moteur électrique (2) fixé au boîtier ; une roue dentée principale (4) reliée mécaniquement au moteur électrique (2) par des engrenages mécaniques (3) ; une boîte de vitesses (5), où l'élément d'entrée de boîte de vitesses (5) est entraîné par la roue dentée principale (4) ; un différentiel d'essieu (6) situé dans un boîtier de différentiel d'essieu (61, 62) et entraîné par un élément de sortie de boîte de vitesses (5) ; des arbres d'entraînement (7, 8) entraînés par le différentiel d'essieu (6), où l'axe des arbres (7, 8) est identique ou parallèle à l'axe (58) de la boîte de vitesses, et comprend en outre un système de frein de stationnement (9) **caractérisé en ce que** le système de frein de stationnement (9) comprend un arbre de frein de stationnement (93) ; un pignon (91) placé sur le premier côté de l'arbre de frein de stationnement (93) ; un disque de frein (92) placé sur le côté de l'arbre (93) opposé au pignon ; et un élément de freinage (94) conçu pour exercer un effet de freinage sur le disque de frein (92), où le système de frein de stationnement (9) est placé de telle sorte que le mouvement de rotation de la roue dentée principale (4) est transmis au pignon (91).

2. Le module d'entraînement électrique pour entraîner un essieu, selon la revendication 1, **caractérisé en ce que** l'axe de l'arbre (93) forme un angle inférieur à 5 ° avec l'axe (58) de la boîte de vitesses.

3. Le module d'entraînement électrique pour entraîner un essieu, selon les revendications 1 et 2, **caractérisé en ce que** le système de frein de stationnement (9) comprend en outre au moins un arbre intermédiaire de frein de stationnement (95) pourvu d'un premier engrenage (951) et d'un second engrenage (952) et placé de telle sorte que le premier engrenage (951) est relié par son engrenage à la roue dentée principale (4) et le second engrenage (952) est relié par son engrenage au pignon (91).

4. Le module d'entraînement électrique pour entraîner un essieu, selon la revendication 3, **caractérisé en ce qu'il** comprend deux arbres intermédiaires (95) disposés autour de la circonférence de la roue dentée principale (4).

5. Le module d'entraînement électrique pour entraîner un essieu, selon les revendications 1 à 4, **caractérisé en ce qu'il** comprend deux étriers de frein (94) placés aux extrémités opposées de la circonférence du disque de frein (92).

6. Le module d'entraînement électrique pour entraîner un essieu, selon les revendications 1 à 5, **caractérisé en ce que** le disque de frein (92) et l'étrier de frein (94) sont placés dans l'espace défini par la position du différentiel (6) et la bride de sortie (81) de l'arbre (8) sur le côté de fourche.

7. Le module d'entraînement électrique pour entraîner un essieu, selon les revendications 1 à 6, **caractérisé en ce qu'**au moins une partie (61, 62) du boîtier de différentiel est de manière rigide reliée à l'élément de sortie de la boîte de vitesses (5).

8. Le module d'entraînement électrique pour entraîner un essieu, selon les revendications 1 à 7, **caractérisé en ce que** le différentiel (6) comprend des pignons différentiels (63) conçus pour tourner autour de l'axe (58) de la boîte de vitesses et des engrenages latéraux (64) fixés sur des arbres d'entraînement (7, 8) et reliés par un engrenage conique aux pignons différentiels (63).

9. Le module d'entraînement électrique pour entraîner un essieu, selon les revendications 1 à 8, **caractérisé en ce que** la boîte de vitesses (5) est réalisée sous la forme d'une boîte de vitesses à trains épicycloïdaux (5), où elle comprend une roue solaire (51) de manière rigide en torsion reliée à la roue dentée principale (4) ; des satellites (52), où le support (510) est réalisé sous la forme de l'élément de sortie de la boîte de vitesses (5) et est relié de manière rigide à la partie de boîtier de différentiel (61) ou est une partie de celle-ci, où la liaison à la partie de boîtier de différentiel (61) est réalisée dans la région définie par les faces de roues planétaires (511, 512) ; et la couronne dentée (54) logée de manière pivotante sur la partie de boîtier (61) sur le côté de roue dentée principale.

10. Le module d'entraînement électrique pour entraîner un essieu, selon la revendication 9, **caractérisé en ce que** la partie de boîtier (61) sur le côté de roue dentée principale est pourvue d'un certain nombre d'ouvertures (611) dans lesquelles les broches (53) sont insérées, où les engrenages planétaires (52) sont logés de manière pivotante sur les broches (53).

11. Le module d'entraînement électrique pour entraîner un essieu, selon la revendication 10, **caractérisé en ce que** les ouvertures (611) sont placées dans l'espace entre le trou pour les pignons différentiels (63), l'engrenage latéral (64) et la roue solaire (51) et la circonférence extérieure de la partie de boîtier (61) du différentiel d'essieu (6).

12. Le module d'entraînement électrique pour entraîner un essieu, selon les revendications 9 à 11, **caractérisé en ce qu'il** comprend en outre une bague de changement de vitesse (11) ; un manchon de changement de vitesse (56) monté de manière coulissante dans la couronne dentée (54) par l'intermédiaire d'une cannelure de liaison et venant en prise de manière coulissante avec la cannelure de la partie de boîtier (61) sur le côté de roue dentée principale ; et une fourchette de changement de vitesse (57) conçue pour déplacer le manchon de changement de vitesse (56), où le manchon de changement de vitesse (56) a au moins trois positions, la première position correspondant au premier engrenage, la deuxième position correspondant au neutre, et la troisième position correspondant au second engrenage.

13. Le module d'entraînement électrique pour entraîner un essieu, selon les revendications 1 à 12, **caractérisé en ce que** l'arbre d'entraînement (7) sur le côté de roue dentée principale passe à travers les trous de la roue dentée principale (4) et de la roue solaire (51).

14. Le module d'entraînement électrique pour entraîner un essieu, selon les revendications 1 à 13, **caractérisé en ce qu'il** comprend deux moteurs électriques (2), où les axes (45) des moteurs électriques sont parallèles à l'axe (58) de la boîte de vitesses.

15. Le module d'entraînement électrique pour entraîner un essieu, selon les revendications 1 à 14, **caractérisé en ce que** la partie de boîtier (61) du différentiel d'essieu (6) est supportée par un palier (65) sur une partie moyeu (41) de la roue dentée principale (4).

16. Le module d'entraînement électrique pour entraîner un essieu, selon les revendications 1 à 15, **caractérisé en ce qu'il** comprend en outre un capteur de vitesse électromagnétique (59) monté dans le boîtier (1) ; et une bague de détection (621) reliée de manière rigide à la partie de boîtier (62) sur le côté fourche, où le capteur de vitesse (59) a un jeu prescrit étant axialement adjacent à la bague de détection (621).
